# EUROPEAN PATENT APPLICATION

(11) **EP 2 874 052 A1**
(43) Date of publication of application: **20.05.2015**
(21) Application number: 13816956.0
(22) Date of filing: 12.06.2013
(51) Int. Cl.: G06F 3/048

(54) **MACHINE MANAGEMENT DEVICE**

(30) Priority: 12.07.2012 JP 2012156081; 31.08.2012 JP 2012190809
(71) Applicant: Hitachi Appliances, Inc., Minato-ku Tokyo 105-0022 (JP)
(72) Inventor: OHIRA Yoichi, Tokyo 105-0022 (JP); SAKURAI Koichiro, Tokyo 105-0022 (JP); KAITO Satomi, Tokyo 105-0022 (JP); SUGIYAMA Naoya, Tokyo 105-0022 (JP)
(74) Representative: MERH-IP Matias Erny Reichl Hoffmann
(86) International application number: PCT/JP2013/066139
(87) International publication number: WO 2014/010362

(57) **Abstract**

A machine management device for providing a management screen by which multiple machines are classified into groups and are managed is configured to be able to, when the machine has entered a specific state, make it easy for the user to see where the machine is in a group entirety and thereby to attain improvement in convenience.

Therefore, the machine management device for providing a management screen by which multiple machines are classified into groups and are managed has: a group display part for displaying as many groups as can be settled in a prescribed display area of the management screen among the groups; and a group entirety display part for displaying information of all groups in an order in which the groups are displayed in the group display part and so that the information may be settled in the prescribed display area of the management screen, and is characterized in that when the machine has entered a predetermined state, a form of positions of the group entirety display part corresponding to the group to which the machine belongs changes correspondingly to the predetermined state.

## Description

### Technical Field

The present invention relates to a machine management device for providing a management screen by which multiple machines are managed.

### Background Art

As a background art of this technical field, there is Japanese Patent No. 4466776 (Patent Literature 1). This patent describes as follows: "In order to provide a machine management device for providing a management screen by which multiple facility machines can be managed rationally, the machine management device has a first display control part and a condition determination part, and provides a management screen for managing the multiple facility machines that exist scattered in an upper space configured of multiple lower spaces. The first display control part displays superior objects corresponding to the upper space and inferior objects corresponding to the lower space so that they make up a tree structure on its management screen. The condition determination part determines whether the facility machine agrees with predetermined conditions. The first display control part changes a form of the inferior object according to a result of the determination by the condition determination part as to whether the facility machine of the lower space corresponding to the inferior object agrees with the predetermined conditions, and at the same time changes a form of the superior object according to a result of the determination by the condition determination part as to whether the facility machine in the upper space corresponding to the superior object agrees with the predetermined conditions. Incidentally, the tree structure may reflect an actual physical space structure, or may reflect a logical space structure."

### Citation List

### Patent Literature

PTL 1: Patent Literature 1: Japanese Patent No. 4466776

### Summary of Invention

### Technical Problem

In Patent Literature 1, it is not taken into consideration to display states of all the objects, i.e., all the groups that are managed by a tree structure, namely the states of all the groups in a single screen. Therefore, although a user can grasp existence of a lower group in a specific state from the form of the higher group, the user needs to look for the lower group because it is not known as to where that lower group exists in the tree. Especially when the scale of the tree is large, a scroll operation and an expansion operation of the tree will increase in number, which impairs the user's convenience.

Therefore, the present invention aims at attaining improvement of the convenience so that when the machine has entered the specific state, the user may be enabled to easily find where the machine is in a group entirety, which can attain improvement of the user's convenience in the machine management device for providing a management screen by which the multiple machines are classified into groups and are managed.

### Solution to Problem

In order to solve the above-mentioned problem, a configuration described in claims is adopted, for example. The present application includes multiple means for solving the above-mentioned problem. Giving one example thereof, it is a machine management device for providing a management screen by which the multiple machines are classified into groups and are managed, and the device has a group display part for displaying as many groups as can be settled in a prescribed display area of the management screen among the groups and a group entirety display part for displaying information of all groups in an order in which the groups are displayed in the group display part and so that they may be settled in the prescribed display area of the management screen, and is characterized in that when the machine has entered a predetermined state, a form of positions of the group entirety display part corresponding to the group to which the machine belongs changes correspondingly to the predetermined state.

### Advantageous Effects of Invention

According to the present invention, in the machine management device for providing a management screen by which the multiple machines are classified into groups and are managed, when the machine enters the specific state, the user is enabled to easily find where the machine is in the group entirety, which can attain improvement of the convenience.

Problems, configurations, and effects except those described above will be clarified by explanations of the following embodiments.

### Brief Description of Drawings

Figure 1 is a configuration example of a machine management device of a present embodiment.
Figure 2 is an example of a management screen of a conventional machine management device.
Figure 3 is an example of the management screen of the conventional machine management device.
Figure 4 is an example of a management screen of a machine management device of a first embodiment.
Figure 5 is an example of the management screen of the machine management device of the first embodiment.
Figure 6 is an example of the management screen of the machine management device of the first embodiment.
Figure 7 is an example of the management screen of a machine management device of a second embodiment.
Figure 8 is an example of the management screen of the machine management device of the second embodiment.
Figure 9 is an example of the management screen of the machine management device of the second embodiment.
Figure 10 is an example of a management screen of a machine management device of a fourth embodiment.
Figure 11 is an example of the management screen of the machine management device of the fourth embodiment.
Figure 12 is an example of the management screen of the machine management device of the fourth embodiment.
Figure 13 is an example of a management screen of a machine management device of a fifth embodiment.
Figure 14 is an example of the management screen of the machine management device of the fifth embodiment.
Figure 15 is an example of a management screen of a machine management device of a seventh embodiment.
Figure 16 is an example of the management screen of the machine management device of the seventh embodiment.
Figure 17 is an example of the management screen of the machine management device of the seventh embodiment.
Figure 18 is an example of a management screen of a machine management device of a sixth embodiment.
Figure 19 is one example of a block diagram of the machine management device.
Figure 20 is a management flowchart in the machine management device of Fig. 19.
Figure 21 is an example of the management screen of the machine management device of Fig. 19.
Figure 22 is a configuration example of a machine management device of an eighth embodiment.
Figure 23 is a management flowchart in the machine management device of the eighth embodiment.
Figure 24 is an example of the management screen of the machine management device of the eighth embodiment.
Figure 25 is an example of a display machine selection screen on which a specific state is highlighted.
Figure 26 is an example of the management screen of the machine management device of the eighth embodiment.
Figure 27 is an example of the display machine selection screen on which a specific state of a ninth embodiment is selected.

### Description of Embodiments

Hereinafter, embodiments will be described using drawings.

### <First embodiment>

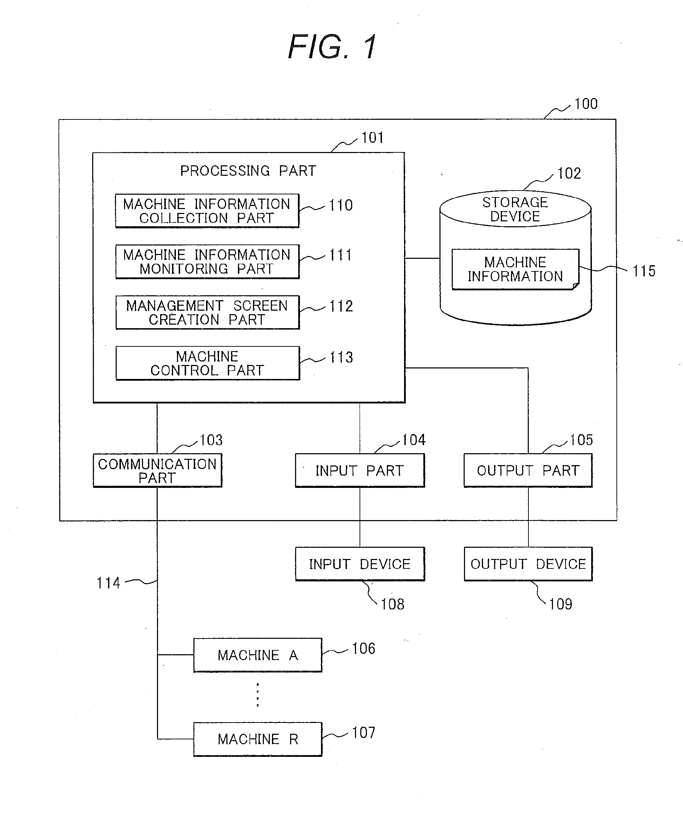

Fig. 1 is an example of a block diagram of a machine management device 100 of this embodiment. The machine management device 100 is configured of: a processing part 101 for performing various processing for managing the machines; a storage device 102 for storing machine information 115; a communication part 103 for transmitting and receiving data with each of the machines through a channel 114; an input part for inputting a user's operation from an input device 108; and an output part 105 for outputting images and sounds to an output device 109.

As one example of the storage device 102, there are a memory, a hard disk, etc. As one example of the input device 108, there are a keyboard, a mouse, etc. As one example of the output device 109, there are a display, a loudspeaker, etc. and a management screen that will be explained later corresponds to this output device 109. The input device 108 and the output device 109 may be separate parts from the machine management device 100, or may be incorporated in it. As one example of the channel 114, there are Ethernet (registered trademark), RS-232C, etc.

The machine management device 100 is further configured of: a machine information collection part 110 for collecting machine information of a machine A106 to a machine R107 and storing the machine information 115 in the storage part 102; a machine information monitoring part 111 for monitoring machine states from the stored machine information 115; a management screen creation part 112 for creating the management screen using the stored machine information 115; and a machine control part 113 for controlling the machine according to the user's operation inputted from the input device 108 through the input part 104.

Fig. 1 is a configuration example of the machine management device, which is not intended to limit a machine configuration, the number of machines, and a connection form of the machines. Incidentally, the machines of this embodiment are, for example, an indoor unit, an outdoor machine, etc. of which an air conditioner is configured.

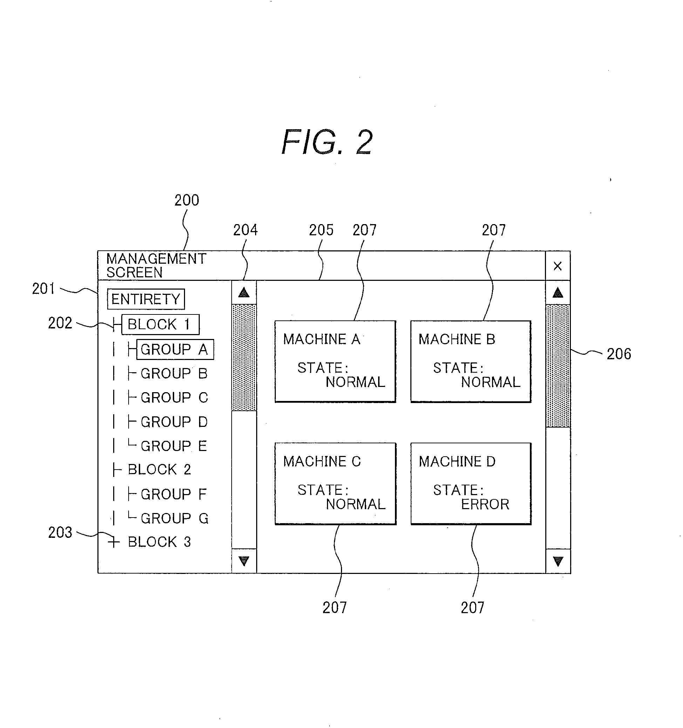

Fig. 2 is a display example of a conventional management screen when the machine has entered a specific state in the machine management device 100. A conventional display example will be explained in the case where an error arising from occurrence of an abnormal condition in the machine as the specific state using Fig. 2. A management screen 200 is configured of a group display part 201, a scroll display part 204 of the group display part 201, a machine information display part 205, and a scroll display part 206 of the machine information display part.

Incidentally, the group display part 201 displays the groups, from higher groups to lower groups, in a tree structure.

202 in the group display part 201 shows a state where the tree is expanded; 203 shows a state where the tree is folded up. Incidentally, in this embodiment, as constituent groups of the tree structure, groups from the highest group to the lowest group are called as follows: the "entirety" as the highest group, the "block" as intermediate groups, and the "group" as the lowest groups.

In the group display part 201, there are displayed: the "entirety" that is the highest group; a "block 1," a "block 2," and a "block 3," that are lower groups of the "entirety"; a "group A," a "group B," a "group C," a "group D," and a "group E" that are lower groups of the "block 1"; and a "group F" and a "group G" that are lower groups of the "block 2."

Here, it is assumed that the user has selected the "group A" in the tree. The "group A" is a group that manages the machine A, the machine B, the machine C, and the machine D. 207 is the machine information of the machines A to D managed by the "group A". The management screen creation part 112 of the machine management device 100 informs the user of existence of the machine in which an error has occurred by changing a display format of the "group A" that is a group managing the machine D in which the error has occurred and changing a display format of the "block 1" that is the higher group of the "group A" and the "entirety." Here, as one example of a change of the display format, a group name is surrounded by frame borders.

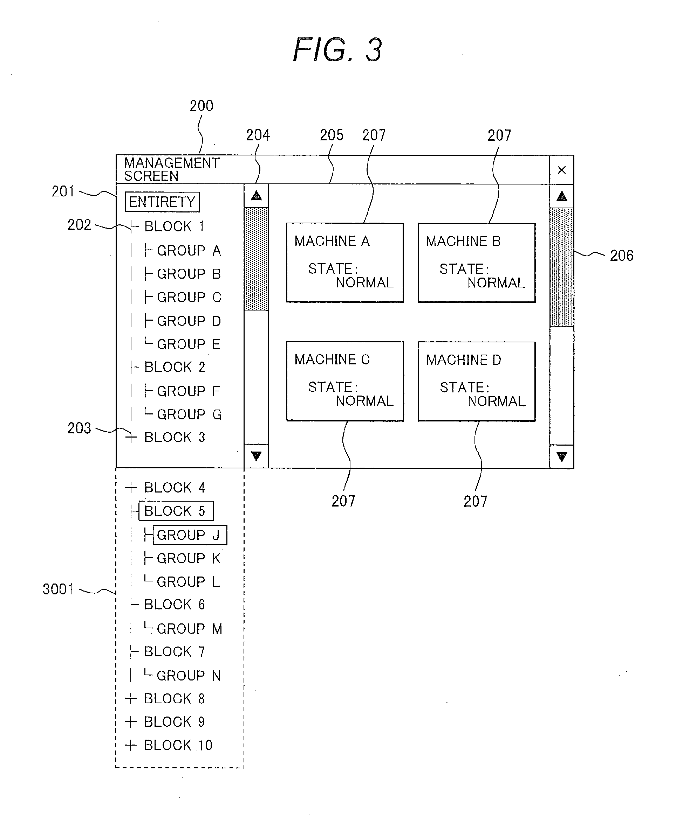

Next, a display example of the conventional management screen in the case where the machine in the specific state exists outside a display range of the tree that the user is displaying will be explained using Fig. 3. Fig. 3 explains the specific state as an error. 3001 is an out-of-range display part of the group display part 201 that the user is displaying. In the out-of-range display part 3001 of the group display part 201, there exists: a "block 4," a "block 5," a "block 6," a "block 7," a "block 8," a "block 9," and a "block 10" of the intermediate group; a "group J," a "group K," and a "group L" that are lower groups of the "block 5"; a "group M" that is a lower group of the "block 6"; and a "group N" that is a lower group of the "block 7."

Here, the management screen creation part 112 of the machine management device 100 informs the user of the existence of the machine in which the error has occurred by changing a display format of the "group J" that manages the machine in which the error has occurred in the group display part 201, and at the same time by changing a display format of the "block 5" that is a higher group of the "group J" and the "entirety." However, since the "group J" and the "block 5" exist in the out-of-range display part 3001 of the group display part 201, the user can only see that the "entirety" is surrounded by the frame borders.

It is not realistic to prepare the large-sized output device 109 (the management screen) capable of displaying the whole tree structure that is configured of tens of groups or more. Moreover, there is a case where a small-sized output device 109 is adopted for the machine management device 100 to attain cost reduction. In such a case, if the tree structure configured of tens of groups or more is displayed, the user will need to look for the "group" that is surrounded by the frame borders by performing a scroll operation and an expansion operation of the tree in order to look for in which machine the error has occurred in the management screen of the machine management device, which will pose a problem of impairing the user's convenience.

Then, in the following, the output device 109 (the management screen) of this embodiment for solving the problem that arose with the conventional output device 109 (the management screen) shown in Figs. 2 and 3 will be explained.

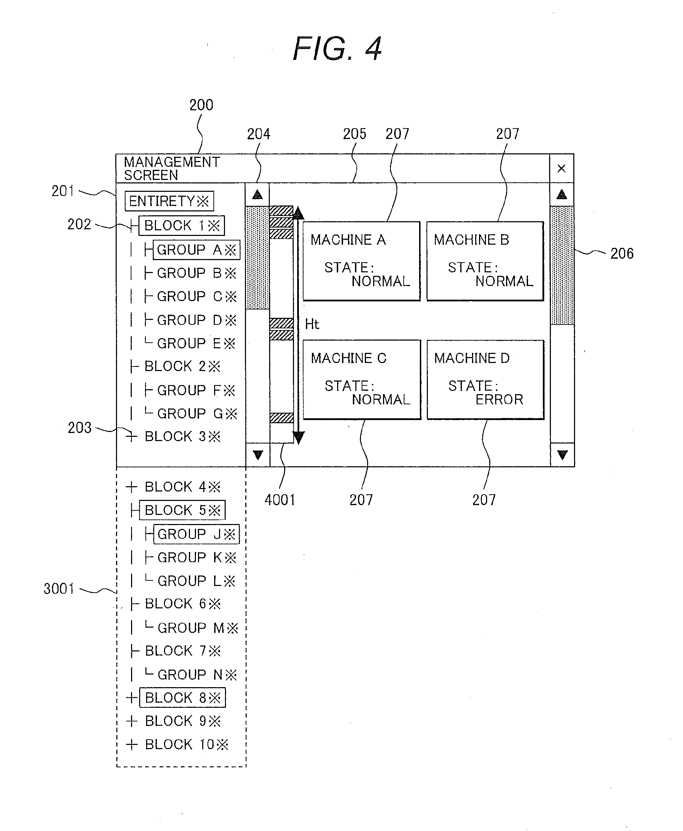

Fig. 4 is a diagram for explaining a display example of the output device 109 (the management screen) for this of this embodiment. 4001 is a group entirety display part for showing the group display part 201 and the out-of-range display part 3001. In this embodiment, the width of the group entirety display part 4001 in the tree expansion direction and the width in the tree expansion direction of an area in which a scroll bar of the scroll display part 204 can move are made to coincide with each other, being designated as Ht.

A change method of a display format of the group entirety display part 4001 will be explained. Here, as one example of the change of the display format, a case of coloring will be explained. The width of the group entirety display part 4001 in the tree expansion direction is denoted by Ht, and the number of groups (groups marked with a *) that the user expands in the tree is denoted by An.

An is 23 in the case of Fig. 4. The width in the tree expansion direction per group is obtained by Ht/An. That is, the width of the group entirety display part 4001 in the tree expansion direction is divided by the number of groups. Sequentially from the top, to the divided areas, the groups of the tree are assigned sequentially from the top. Subsequently, the divided area in whose assigned group the error has occurred is colored. In the case of Fig. 4, the divided areas that are assigned to the "entirety," the "block 1," the "group A," the "block 5," the "group J," and the "block 8" in the group entirety display part 4001 are colored.

That is, the machine management device 100 of this embodiment provides the management screen 200 by which the multiple machines are classified into groups and are managed, and is configured of: the group display part 201 for displaying as many groups as can be settled in a prescribed display area of the management screen 200; and the group entirety display part 4001 for displaying the information of all groups in an order in which the groups are displayed in the group display part 201 and so that it may be settled in the prescribed display area of the management screen 200.

Then, as described above, when the machine D has entered a predetermined state such as an error, a form of the positions of the group entirety display part 4001 corresponding to the group A to which the machine D belongs changes correspondingly to the predetermined state such as an error. For example, if it is an error, it will be colored red, so that it can mean a warning. Incidentally, the groups referred to here may be configured to include all the groups, from the highest group to the lowest group. Alternatively, only "group A" etc. that are the lowest groups may be configured to be colored.

Moreover, when the machine D changes into the predetermined state such as an error, the form of the positions of the group entirety display part 4001 corresponding to the group A to which the machine D belongs changes correspondingly to the predetermined state such as an error, and at the same time the form of the positions of the group display part 201 corresponding to the group A to which the machine D belongs changes. Although the group A is surrounded by the frame borders as this change in Fig. 4, it may be colored, be made conspicuous by thickening characters, or be made to blink instead.

Moreover, a display area of the group entirety display part 4001 is divided by a number more than or equal to the number of groups, and the information of all groups is displayed in this divided display area in an order in which the groups are displayed in the group display part 201 and so as to be settled in the prescribed display area of the management screen 200. Incidentally, as the groups referred to here, the groups may be configured to include all the groups, from the highest group to the lowest group, or the groups may be configured to include only the "groups A" etc. that are the lowest groups.

That is, in the case where the groups are further classified into the higher groups and are managed, the groups and the higher groups as many as can be settled in the prescribed display area of the management screen 200 among the groups and the higher groups are displayed in the group display part 201, the display area of the group entirety display part 4001 is divided by a number more than or equal to a number obtained by summing the groups and the higher groups, and in this divided display areas, information of an entirety of the groups and the higher groups is displayed in an order in which the groups and the higher groups are displayed in the group display part 201 and so as to be settled in the prescribed display area of the management screen 200.

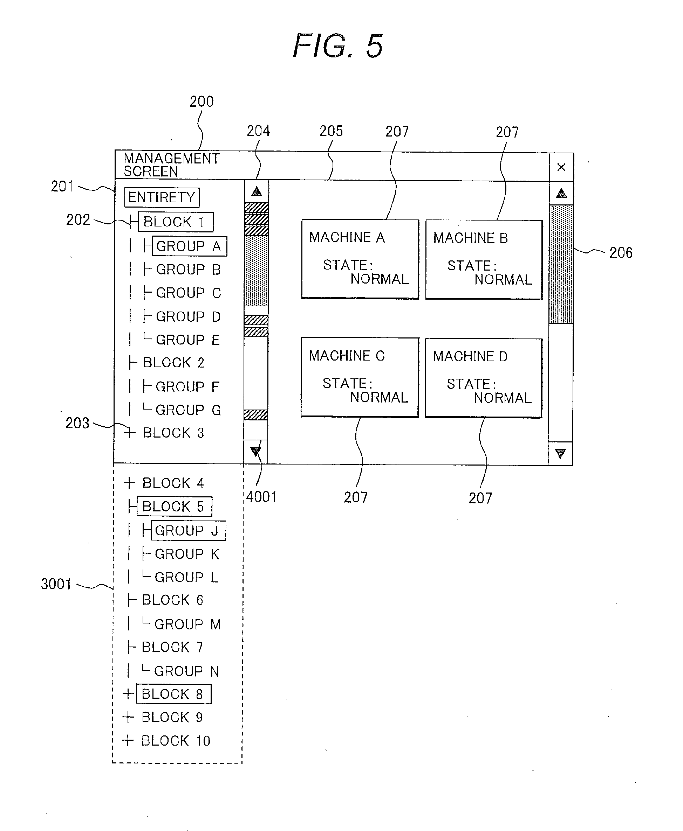

Fig. 5 is a display example of the management screen at the time of displaying the scroll display part 204 and the group entirety display part 4001 of Fig. 4 overlappingly. In this way, the group entirety display part 4001 may be displayed overlapped on other screen parts. By displaying the group entirety display part 4001 overlapped on the other screen parts, especially on the scroll display part 204, the user's eye movement can be lessened.

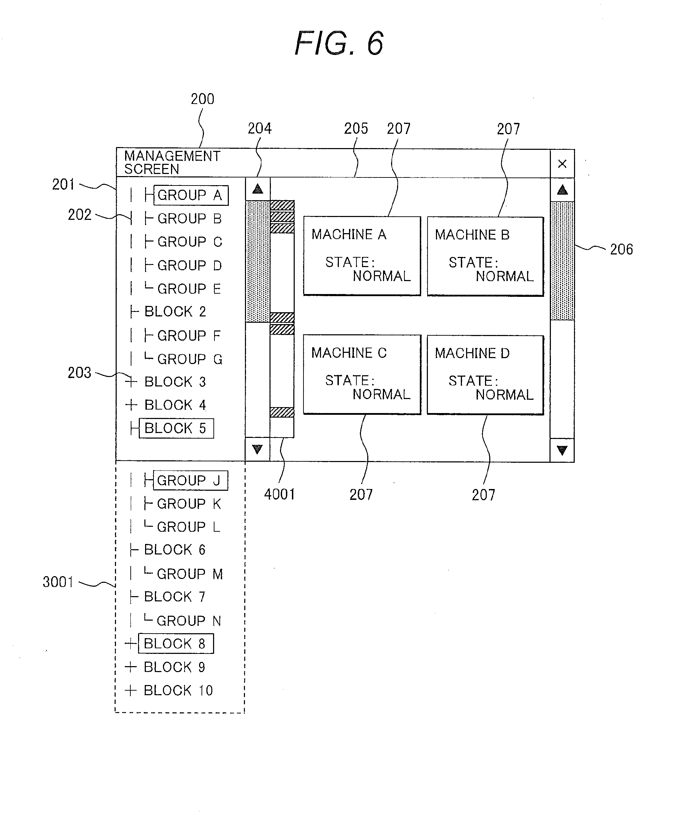

Fig. 6 is a display example of the management screen when an upper end of a third colored portion from the top of Fig. 4 is aligned with an upper end of the scroll bar. That is, the management screen has the scroll display part 204 that enables all the groups to be displayed in the group display part 201 by an operation of the scroll bar by the user, the scroll display part 204 is provided in a position corresponding to the group entirety display part 4001, and when the scroll bar is in a position corresponding to a predetermined group of the group entirety display part 4001, the group display part 201 displays the predetermined groups in the display area.

By dividing the width of the group entirety display part 4001 in the tree expansion direction by the number of the groups that the user expands in the tree in this way, a position of the scroll bar relative to a tree entire display area 4001 and a position of the display group relative to the entire tree can be made to coincide with each other, and the user is enabled to easily grasp where the group to which the error generating machine belongs is, and to easily perform an operation of bringing the scroll bar to this group.

Incidentally, Figs. 2 to 6 are display examples of the management screen, which are not intended to limit a change method of the display format, the tree structure, the number of the machines, and the machine state shown to the user.

By changing the display in the above manner, the user is enabled to grasp at a glance in which position of the tree the machine in the specific state such as an error exists without the scroll operation and the expansion operation of the tree. Furthermore, the user is enabled to make the position of the scroll bar relative to the group entirety display part 4001 correspond with the position of the display groups relative to the entire tree, which can improve convenience of the machine management device.

### <Second embodiment>

Hereinafter, a second embodiment of the present invention will be described using drawings.

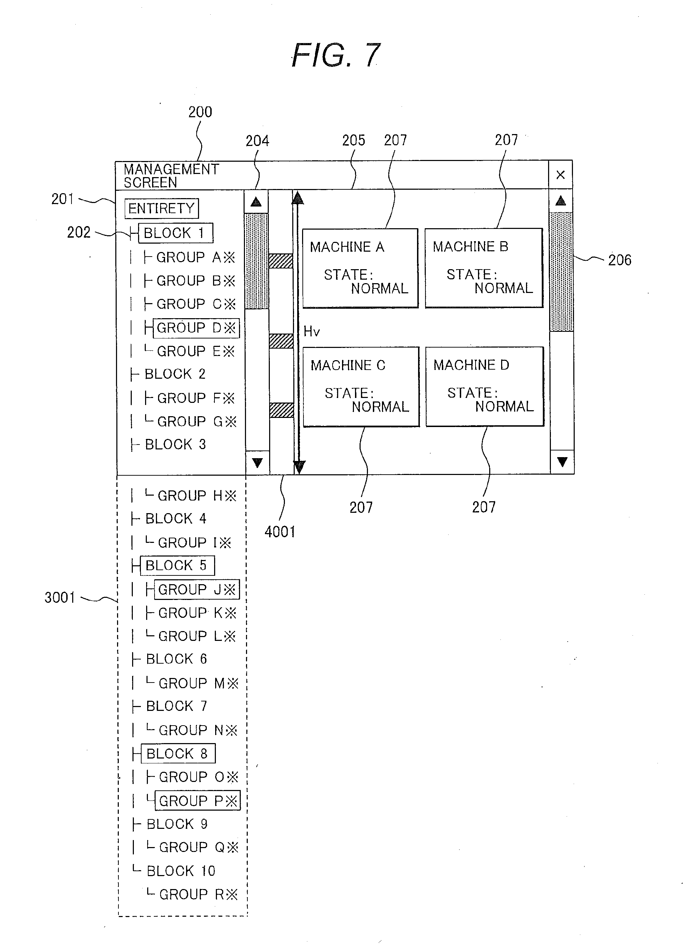

Fig. 7 shows the management screen in which all the trees of Fig. 4 are expanded. Moreover, in this embodiment, the width of the group entirety display part 4001 of Fig. 7 in the tree expansion direction and the width of the group display part 201 in the tree expansion direction are made to coincide with each other.

The change method of the display format of the group entirety display part 4001 will be explained. Here, as one example of the change of the display format, the case of coloring will be explained. Moreover, the specific state will be explained as an error. The width of the group entirety display part 4001 in the tree expansion direction is denoted by Hv, and the number of the lowest groups (groups marked with a *) of the tree structure is denoted by Bn. The "lowest groups" referred to here correspond to the "groups" of the group A, the group B, etc. in the first embodiment, and Bn is constant irrespective of an expanded state of the tree.

In the case of Fig. 7, Bn is 18. The width in the tree expansion direction per group is obtained by Hv/Bn. That is, the width of the group entirety display part 4001 in the tree expansion direction is divided into 18 parts. Sequentially from the top, each area divided into 18 is assigned to the lowest groups of the tree structure sequentially from the top. After that, the divided area such that an error has occurred in the assigned lowest group is colored. In the case of Fig. 7, the divided areas assigned to the "group D," the "group J," and the "group P" in the group entirety display part 4001 are colored.

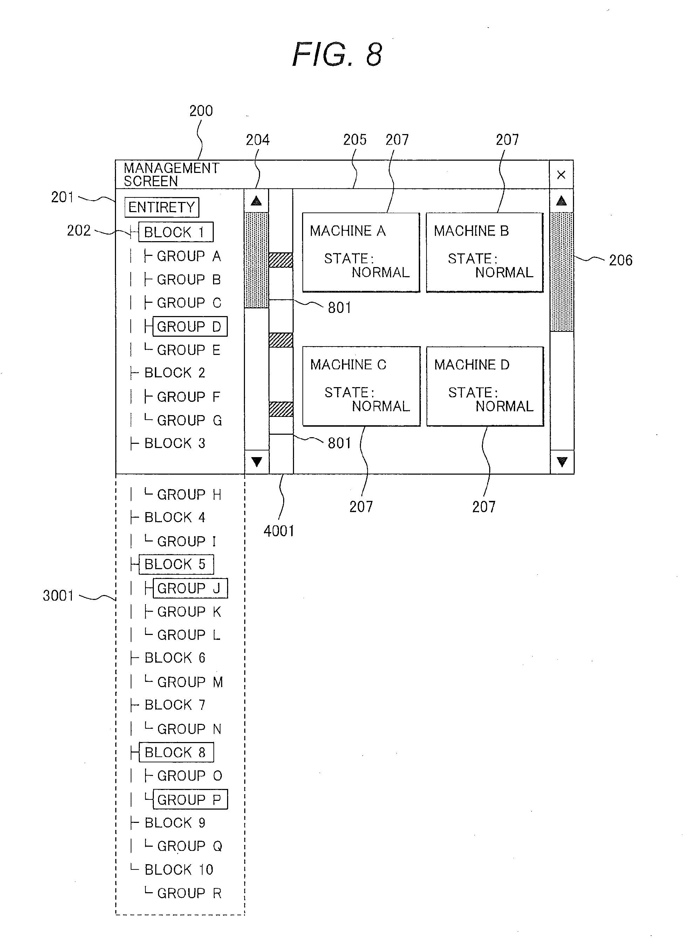

Fig. 8 displays display section lines 801 drawn from the head of the group entirety display part 4001 of Fig. 7 for every number of groups that can be displayed in the group display part 201. By changing the display format in this way, the user can grasp at a glance what the scale of the entire tree is.

Incidentally, in the division method explained in this embodiment, since the group entirety display part 4001 is divided by the number of the lowest groups irrespective of the expanded state of the tree, there is a case where a position of the group relative to the group display part 201 and a position of the divided area of the group entirety display part 4001 relative to the scroll bar may not coincide with each other.

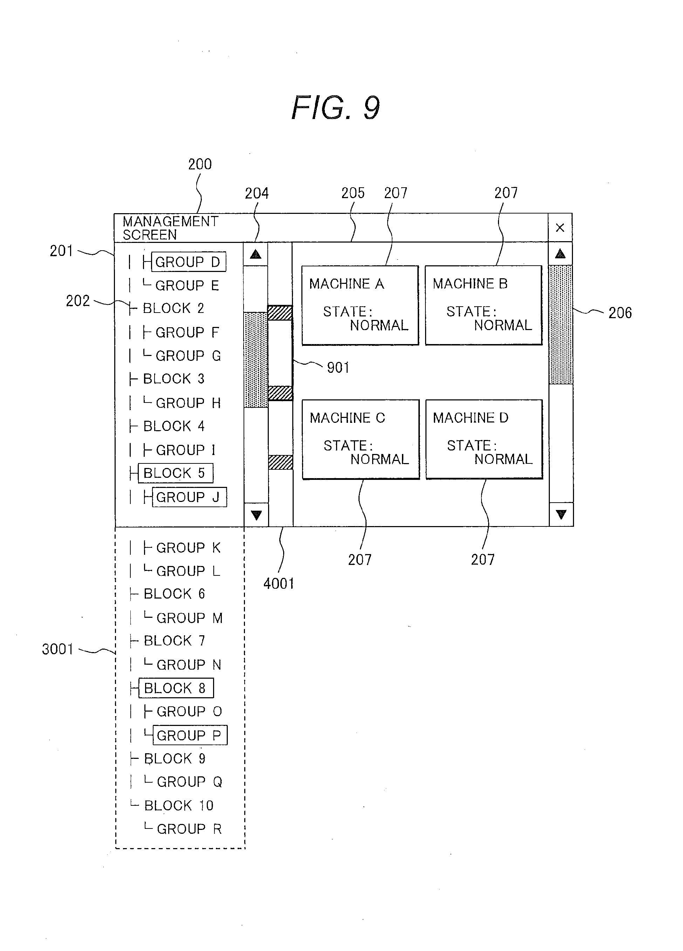

Then, as shown in Fig. 9, by changing a display format of the divided area corresponding to the lowest group in the groups that are displayed in the tree in the group entirety display part 4001, the user is enabled to grasp at a glance which portion of the tree is displayed. Here, as one example of the change of the display format, the divided area is surrounded by display frame borders 901. That is, this indicates information as to in which position the area currently displayed in the group display part 201 is located in the entire tree structure in the group entirety display part 4001.

By changing the display in the above manner, the user is enabled to grasp at a glance in which position of the tree the machine in the specific state exists without the scroll operation and the expansion operation of the tree. Furthermore, by dividing the group entirety display part 4001 by the number of the lowest groups, the divided areas can be enlarged. Moreover, by enlarging the divided areas and changing the display format of the group entirety display part 4001 using the display section line 801 and the display frame borders 901, it is possible to make the group entirety display part 4001 easy to see and improve the convenience of the machine management device 100.

### <Third embodiment>

Hereinafter, a third embodiment of the present invention will be described. Although the division method of the group entirety display part 4001 was explained in the first embodiment and the second embodiment, respectively, there may be a case where the width of a divided area may be below a minimum display unit of the output device. For example, it is assumed that the output device 109 is a liquid crystal display and Ht or Hv is 1000 pixels. At this time, when An or Bn is 2000, Ht/An or Hv/Bn (size of divided area) becomes 0.5 pixel, and cannot be displayed. This problem can be solved by correcting An or Bn to be a prescribed value when the size of divided area is below a constant value.

The explanation will be given assuming that when the size of the divided area is below 10 pixels, An or Bn is corrected to be 50. A correction value is stored in the storage device 102. When Ht or Hv is 1000 and An or Bn is 200, Ht/An or Hv/Bn becomes five, being below 10. Then, An or Bn is corrected to be 50 and Ht/An or Hv/Bn is recalculated. As a result, Ht/An or Hv/Bn becomes 20, and the tree entire display area 4001 is divided into 50 parts whose number is the correction value, and the size of the divided area becomes 20 pixels. When Ht/An or Hv/Bn is indivisible, remainder pixels are added to the divided area one pixel by one pixel to adjust the size of the divided area.

Here, since one group cannot be assigned to one divided area, the number of groups is divided by 50 that is the correction value. As a result of dividing, it is found that what is necessary is just to assign four groups to one divided area. When the number of groups is indivisible by the correction value, the number of groups allocated to one divided area is adjusted by adding the number of remainder groups to the divided area one by one.

In the case where multiple groups are assigned to one divided area, when the divided area is selected in a situation where groups of multiple states are intermingled, which group should be selected poses a problem. This problem can be solved by performing one of the followings: giving a priory to the state and selecting a group with a high priority; selecting a group that is at the top in the tree structure; selecting a group having a name that is the head in alphabetical order; selecting a group whose state changes first; selecting a group whose state changes last; etc.

By dividing the group entirety display part 4001 and assigning the group like the above, even in the case of a large number of groups, it is possible to prevent the size of the divided area from becoming less than or equal to the constant value. Therefore, a display area that the user easily find at a glance can be shown, which improves the convenience of the machine management device.

### <Fourth embodiment>

Hereinafter, a fourth embodiment of the present invention will be described using drawings.

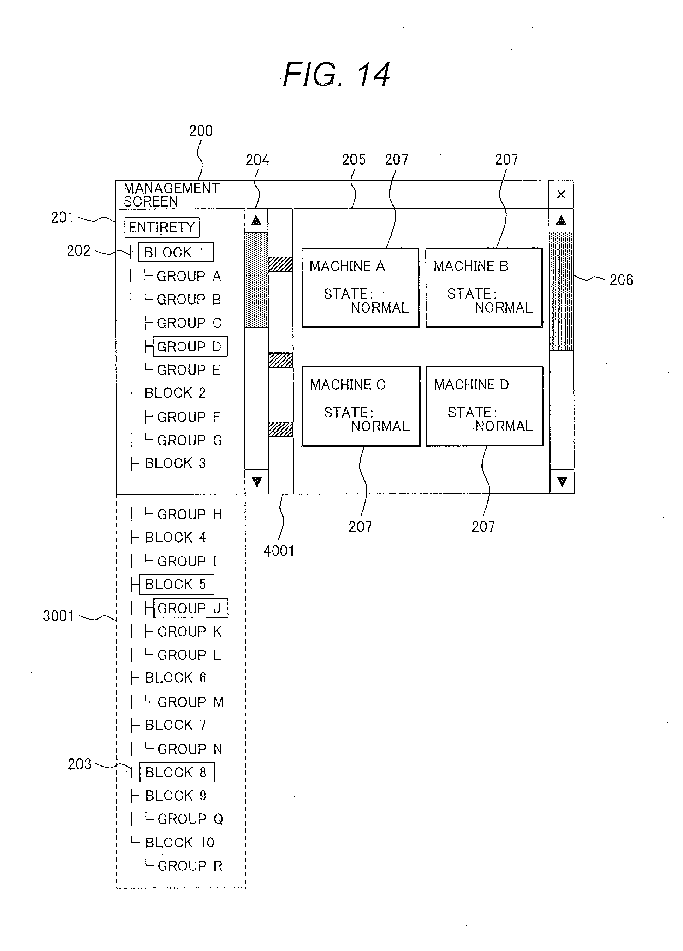

An operation example in which the selected group of the tree is changed to a group assigned to the divided area by selecting a portion in which the display format of the group entirety display part 4001 is changed will be explained using Fig. 7, Figs. 10 to 12, and Fig. 14. In this embodiment, as one example of the change of the display format, the case of coloring will be explained. Fig. 14 shows a display example of the management screen in a state where the "block 8" of Fig. 7 is folded up.

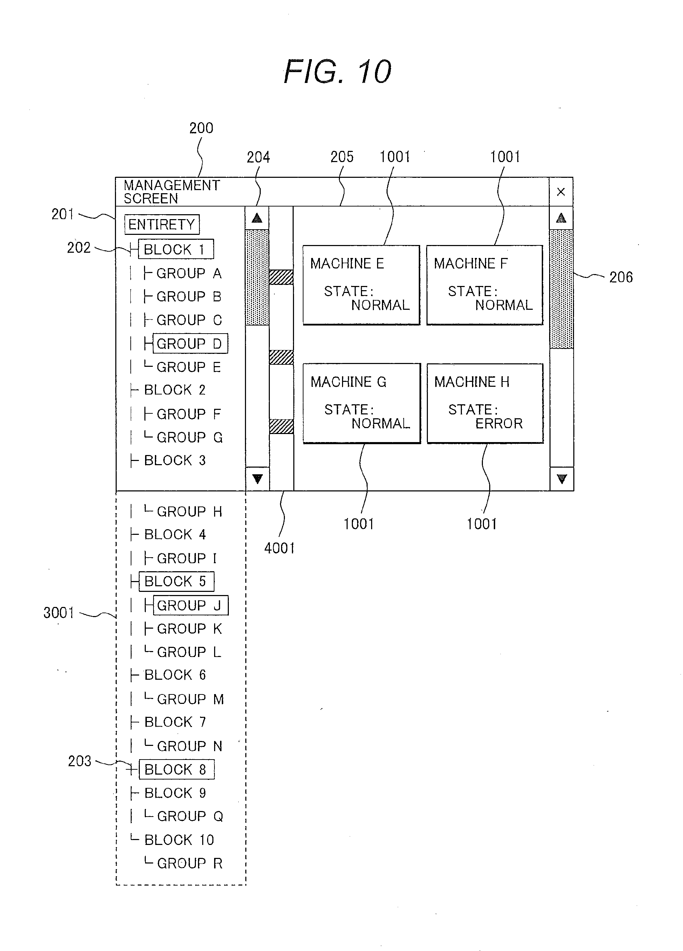

First, it is assumed that the user is displaying the tree in the state of Fig. 14, and selects the "group A." At this time, machine information 207 of the machines A to D managed by the "group A" is displayed in the machine information display part 205. Here, when the user selects a colored portion that is in the top of the group entirety display part 4001, the processing part 101 detects the user's operation from the input device 108 through the input part 104, and creates a screen (a screen shown in Fig. 10) in which a selected group of the tree is changed from the "group A" to the "group D" by controlling the management screen creation part 112. The processing part 101 outputs the created management screen to the output device 109 through the output part 105. As a result, machine information 1001 of the machines E to H managed by the "group D" is displayed in the machine information display part 205.

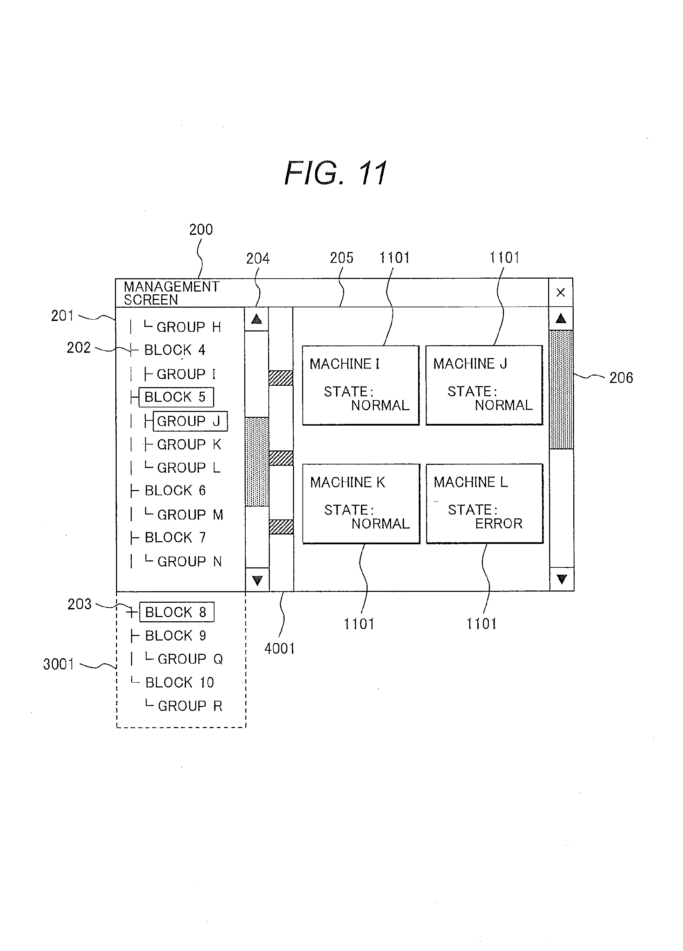

Moreover, when the user selects a colored portion in the middle of the group entirety display part 4001, the processing part 101 detects the user's operation from the input device 108 through the input part 104, and creates a screen (a screen shown in Fig. 11) such that the selected group of the tree is changed from the "group A" to the "group J" by controlling the management screen creation part 112. The processing part 101 outputs the created management screen to the output device 109 through the output part 105. As a result, machine information 1101 of the machines I to L managed by the "group J" is displayed in the machine information display part 205.

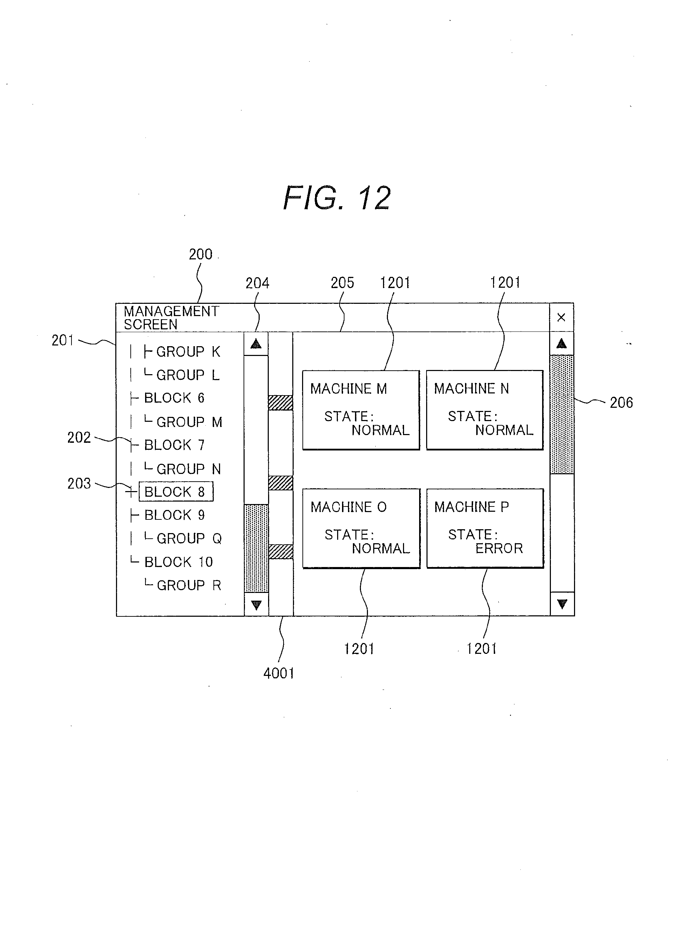

Moreover, when the user selects a colored portion at the bottom of the group entirety display part 4001, the processing part 101 detects the user's operation from the input device 108 through the input part 104, and creates a screen (a screen shown in Fig. 12) in which the selected group of the tree is changed from the "group A" to the "block 8" by controlling the management screen creation part 112. The processing part 101 outputs the created management screen to the output device 109 through the output part 105. As a result, machine information 1201 of the machines M to P managed by the "block 8" is displayed in the machine information display part 205.

By changing the display in the above manner, the user is enabled to select the group that manages the machine in the specific state in one operation while maintaining an expansion state of the tree without the scroll operation and the expansion operation of the tree, which can improve the convenience of the machine management device.

### <Fifth embodiment>

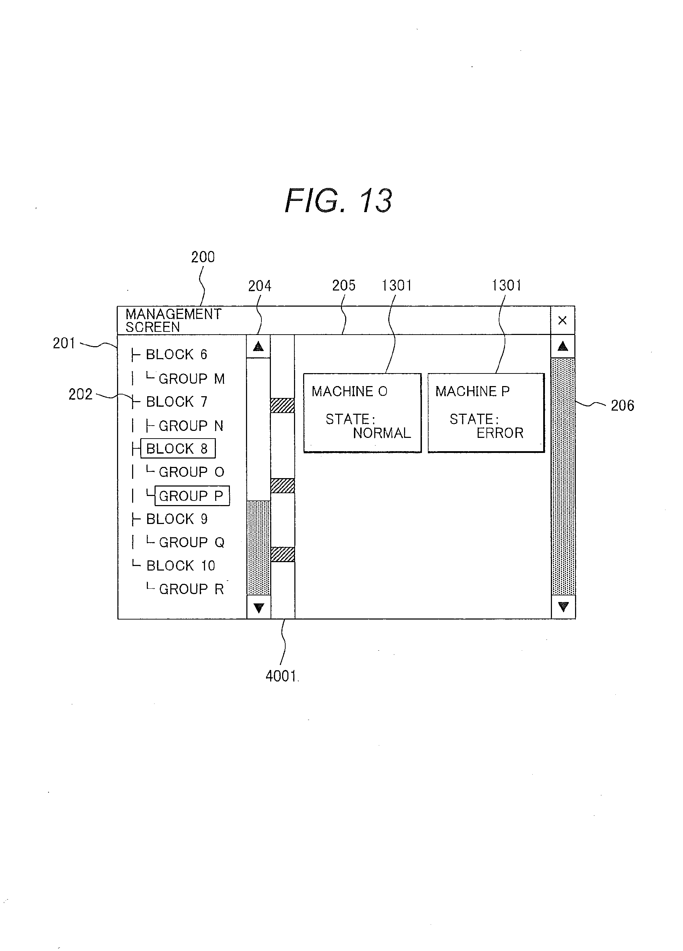

Hereinafter, a fifth embodiment of the present invention will be described using drawings. An operation example of changing the selected group of the tree different from that of Fig. 12 will be explained using Fig. 13 and Fig. 14. Fig. 14 is a display example of the management screen in a state where the "block 8" of Fig. 7 is folded up.

First, it is assumed that the user displays the tree in the state of Fig. 14, and selects the "group A." At this time, the machine information 207 of the machines A to D managed by the "group A" is displayed in the machine information display part 205. Here, when the user selects the colored portion at the bottom of the tree entire display area 4001, the processing part 101 detects the user's operation from the input device 108 through the input part 104, and changes a selection object of the tree by controlling the management screen creation part 112. At this time, a screen (a screen shown in Fig. 13) in which the "block 8" that is a superior object of the "group P" and the "entirety" are expanded to change the "group A" to the "group P" is created. The processing part 101 outputs the created management screen to the output device 109 through the output part 105. As a result, machine information 1401 of the machine O and the machine P managed by the "group P" is displayed in the machine information display part 205.

Fig. 13 and Fig. 14 are display examples of the management screen, which are not intended to limit the change method of the display format, the tree structure, the number of the machines, and the machine state shown to the user.

By changing the display in the above manner, the user is enabled to select the most inferior object that manages the machine in the specific state by one operation without the scroll operation and the expansion operation of the tree, which can improve the convenience of the machine management device.

### <Sixth embodiment>

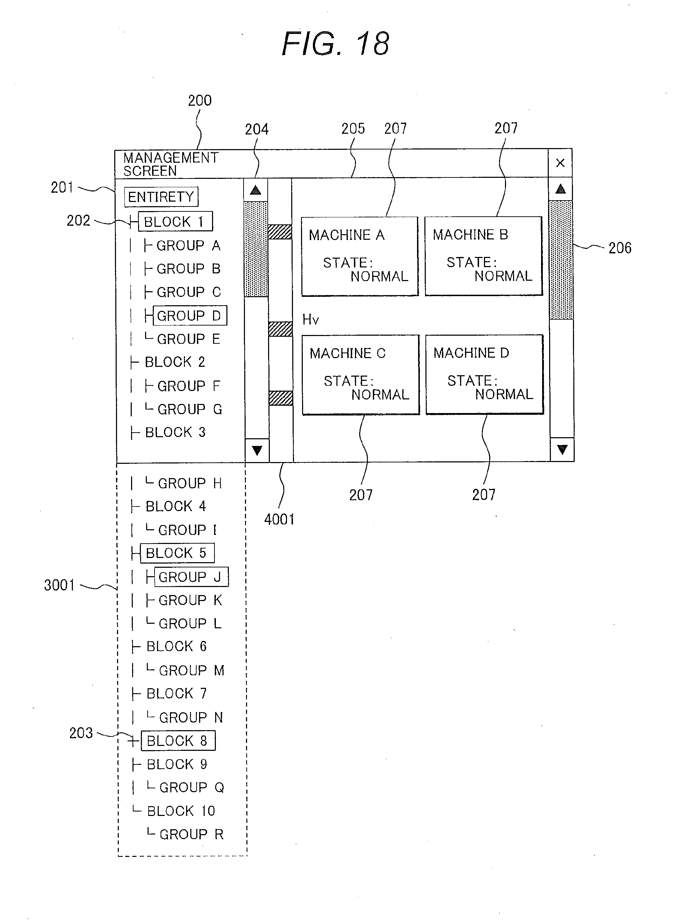

An operation example in which the tree is expanded at timing when a state of the group changes will be explained using Figs. 7 and 18. Fig. 18 is a display example of the management screen where the machine managed by the "block 8" of Fig. 14 does not enter the specific state. Here, the specific state will be explained as an error.

First, it is assumed that the user is displaying the tree in the state of Fig. 18 and is selecting the "group A." At this time, the machine information 207 of the machines A to D managed by the "group A" is displayed in the machine information display part 205.

Here, suppose that an error occurs in the machine that the group P manages. When the error occurs, the processing part 101 expands the "block 8" by controlling the management screen creation part 112, and creates a screen (a screen shown in Fig. 7) such that display formats of the "block 8" and the "group P" are changed. The processing part 101 outputs the created management screen to the output device 109 through the output part 105. In Fig. 7, as one example of the change of the display format, the "block 8" and the "group P" are surrounded by the frame borders.

By expanding the groups, from the lowest group to which the error generating machine belongs to the highest group, in the tree automatically like the above, it becomes easy for the user to discover the machine in the specific state at the time of scrolling, which improves the convenience of the machine management device.

### <Seventh embodiment>

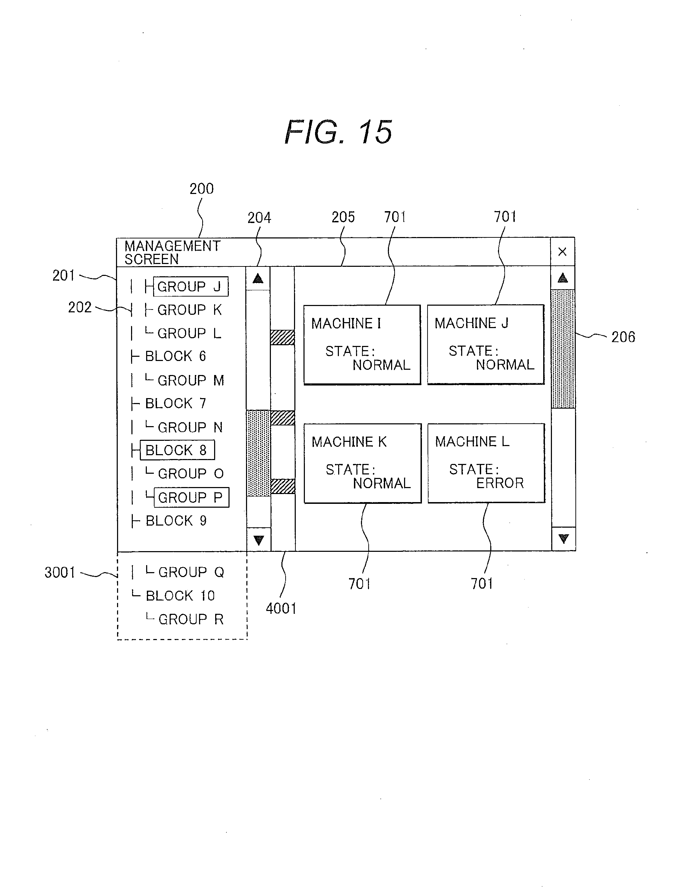

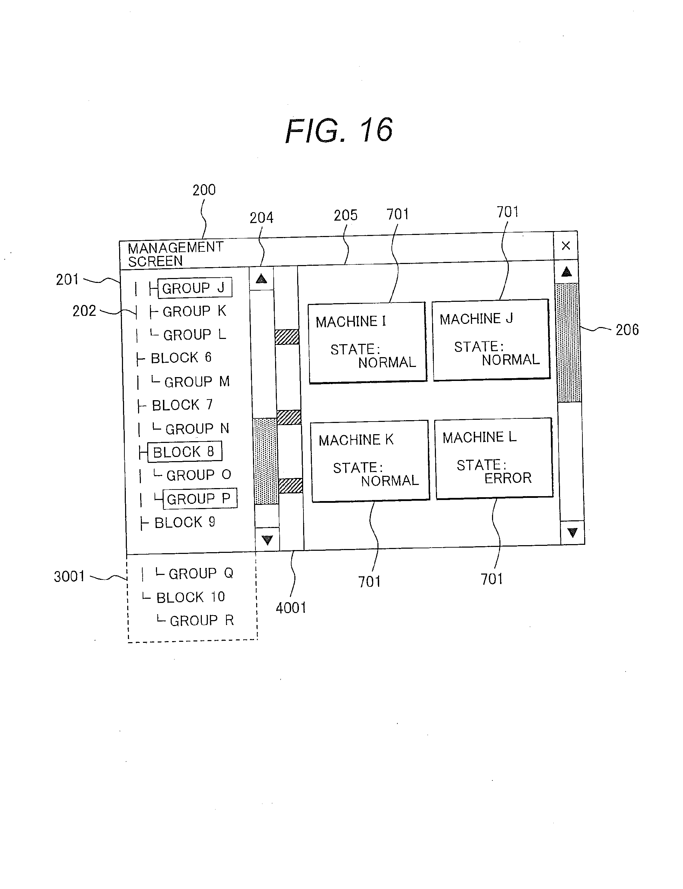

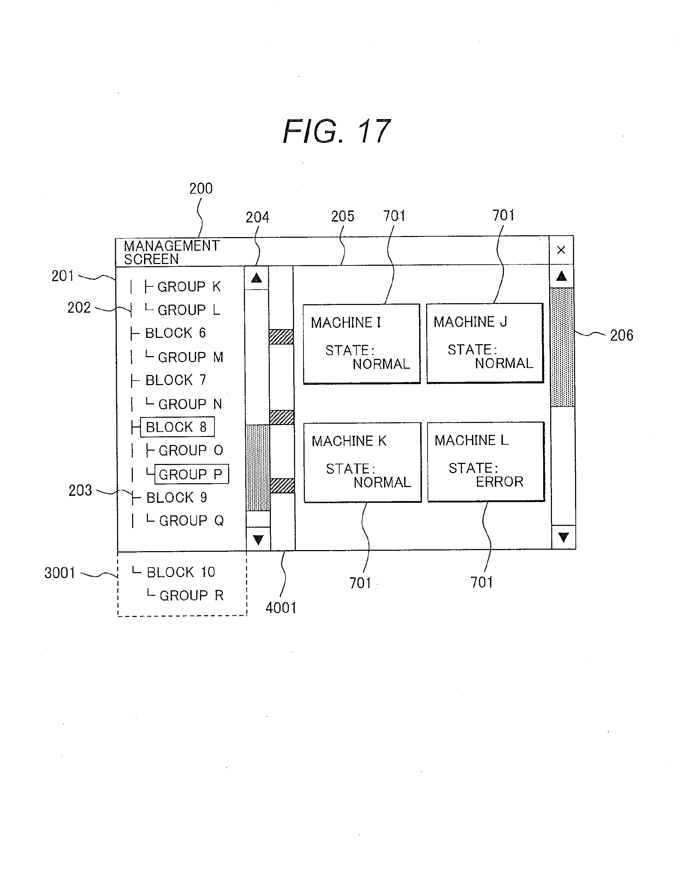

An operation that makes the machine in the specific state easy to be discovered at the time of scrolling will be explained using Figs. 15 to 17. In Fig. 15, the "group J" whose managing machine is in the specific state is displayed at the top of the tree. Fig. 15 explains the specific state as an error. It is assumed that the scroll bar is lowered downward and this state changes into a state of Fig. 16. At this time, the scrolling of the tree is stopped. Furthermore, it is assumed that the scroll bar is lowered downward to be under the scroll bar, and the state changes to a state of Fig. 17. Here, the scrolling of the tree is resumed.

That is, Fig. 16 shows that the machine management device is configured to stop a scrolling operation for a specified time when an object managing the machine in the specific state passes through a prescribed position at the time of scrolling of the tree, or the machine management device is configured to stop the scrolling operation during time when the amount of movement of the scroll bar is less than or equal to a predetermined amount.

By making it operate as described above, it is possible to make the scrolling temporarily stop at a group that manages the machine in the specific state, and to indicate existence of the specific state to the user, which improves the convenience of the machine management device.

### <Eighth embodiment>

In Patent Literature 1, it is not considered to present the user that a machine in the specific state exists in a display method other than the tree structure. Therefore, when the user looks for the machine in the specific state, it is necessary to look for the machine of a form indicating the specific state from the machines displayed in the tree structure and to expand the tree structure one by one. Especially in the case of a tree structure with deep layers, operations for expanding the tree increase in number, which impairs the user's convenience. Thereupon, this embodiment aims at providing the machine management device that enables the user to easily grasp existence of the machine having entered the specific state in the tree structure with deep layers.

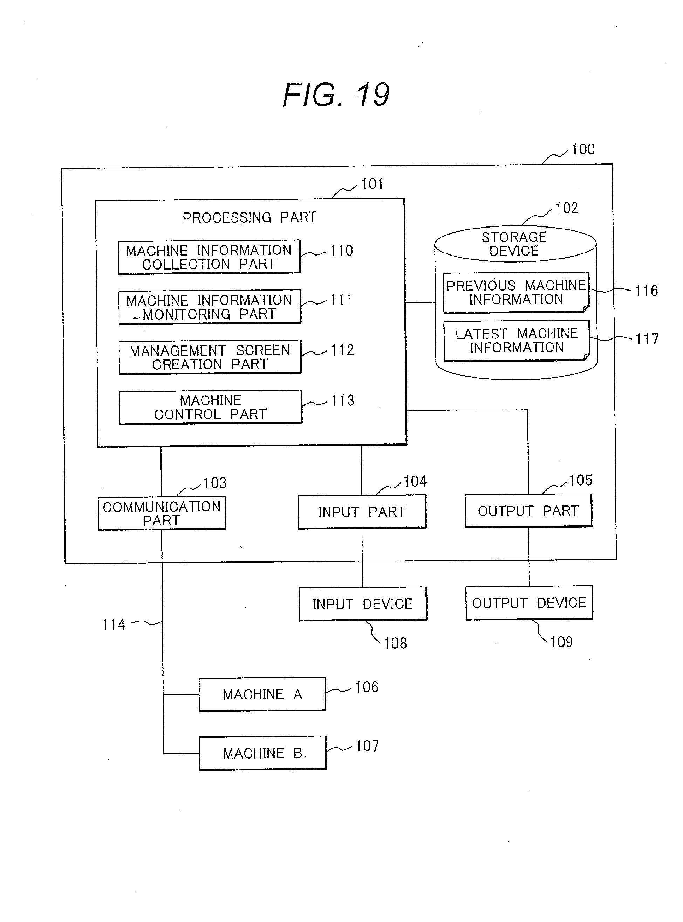

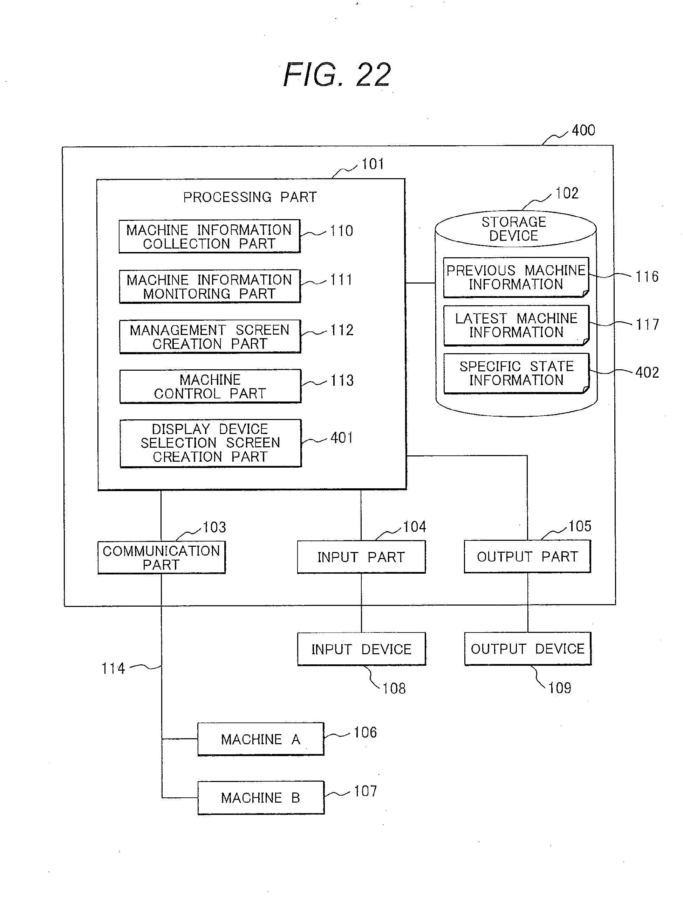

First, one example of an operation of the machine management device 100 will be explained using Figs. 19 to 21, and subsequently an operation of the machine management device 400 of the present invention will be explained using Figs. 22 to 26. Incidentally, although details of the machines that come under the management in this embodiment are omitted, for example, multiple air conditioners installed in facilities such as buildings, shops, hospitals, and schools are targeted. Regarding such air conditioners, since it is often a case where hundreds or thousands of sets are installed in a certain facility in a large case, it becomes necessary to conduct the machine management such as operation control of their ON and OFF, monitoring as to whether occurrence of abnormality exists, or the like in a centralized manner. The machine management device 400 of this embodiment is used in cases like this, and conducts management of multiple installed air conditioners in a centralized manner.

Fig. 19 shows one example of a block diagram of the machine management device 100. The machine management device 100 of Fig. 19 is configured of: the processing part 101 for performing various processing for managing a machine; the storage device 102 for accumulating latest machine information 115 and previous machine information 116; the communication part 103 for transmitting and receiving data to and from each machine through the channel 114; the input part 104 for inputting the user's operation from the input device 108; and the output part 105 for outputting an image and sound to the output device 109.

As one example of the storage device 102, there are a memory, a hard disk, etc. As one example of the input device 108, there are a keyboard, a mouse, etc. As one example of the output device 109, there are a display, a loudspeaker, etc. The input device 108 and the output device 109 may be incorporated in the machine management device 100. As one example of the channel 114, there are Ethernet (registered trademark), RS-232C, etc. The processing part 101 is configured of: the machine information collection part 110 for collecting the machine information of the machine A106 and a machine B107 and accumulating the latest machine information 115 in the storage part 102; the machine information monitoring part 111 for monitoring whether there is a change by comparing the latest machine information 115 being accumulated and the previous machine information 116; the management screen creation part 112 for creating the management screen using the latest machine information 115 being accumulated; and the machine control part 113 for controlling the machine according to the user's operation inputted from the input device 108 through the input part 104. Incidentally, Fig. 19 shows an example of the block diagram of the machine management device, which is not intended to limit the machine configuration, the number of the machines, and the connection form of the machines.

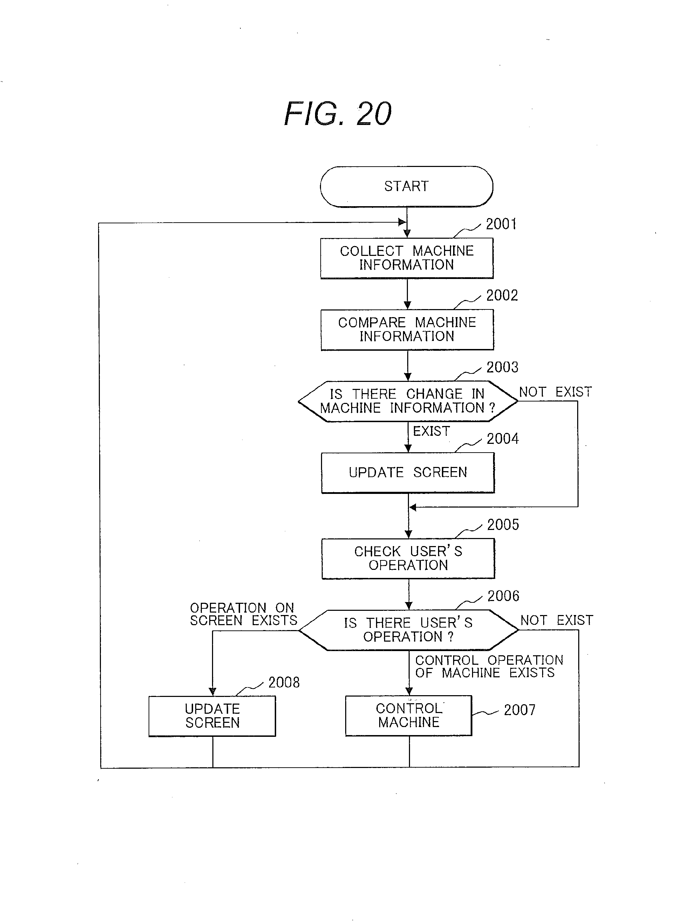

Fig. 20 is a management flowchart of the machine management device 100 of Fig. 19.
Step 2001: The machine information collection part 110 collects the latest machine information 115 of the machine A106 and the machine B107 through the communication part 103, and accumulates it in the storage device 102.
Step 2002: The machine information monitoring part 111 compares the previous machine information 116 and the latest machine information 115, and monitors whether the machine information is changed.
Step 2003: When there is a change, the flow proceeds to Step 2004. When there is no change, the flow proceeds to Step 205.
Step 2004: The machine information monitoring part 111 requests creation and output of the management screen of the management screen creation part 112. The management screen creation part 112 creates the management screen using the latest machine information 115 accumulated in the storage device 102, and outputs it to the output device 109 through the output part 105.
Step 2005: The machine control part 113 receives the user's operation information from the input part 104.
Step 2006: When there is an operation that controls the machine, the flow proceeds to Step 2007. When there is an operation of the screen, the flow proceeds to Step 2008. When there is no operation, the flow returns to Step 2001 and continues management of the machine.
Step 2007: The control part 113 creates control data according to the user's operation inputted from the input device 108 through the input part 104, and controls the machine A106 and the machine B107 through the communication part 103. When the control is completed, the flow returns to Step 2001 and continues the management of the machine.
Step 2008: The management screen creation part 112 updates the management screen according to the user's operation inputted from the input device 108 through the input part 104, and outputs it to the output device 109 through the output part 105. When the updating of the screen is completed, the flow returns to Step 2001 and continues the management of the machine.

Here, Steps 2001 to 2004 of the flowchart may be processed after Steps 2005 to 2008. Moreover, the processing may be modified as follows: each piece of processing is made independent, while Steps 2001 to 2004 are always being processed, when the user's operation is made, the input part 104 notifies the processing part 101 of the user's operation; and upon reception of the notification, the processing part 101 suspends the processing of Steps 2001 to 2004 and processes Steps 2005 to 2008.

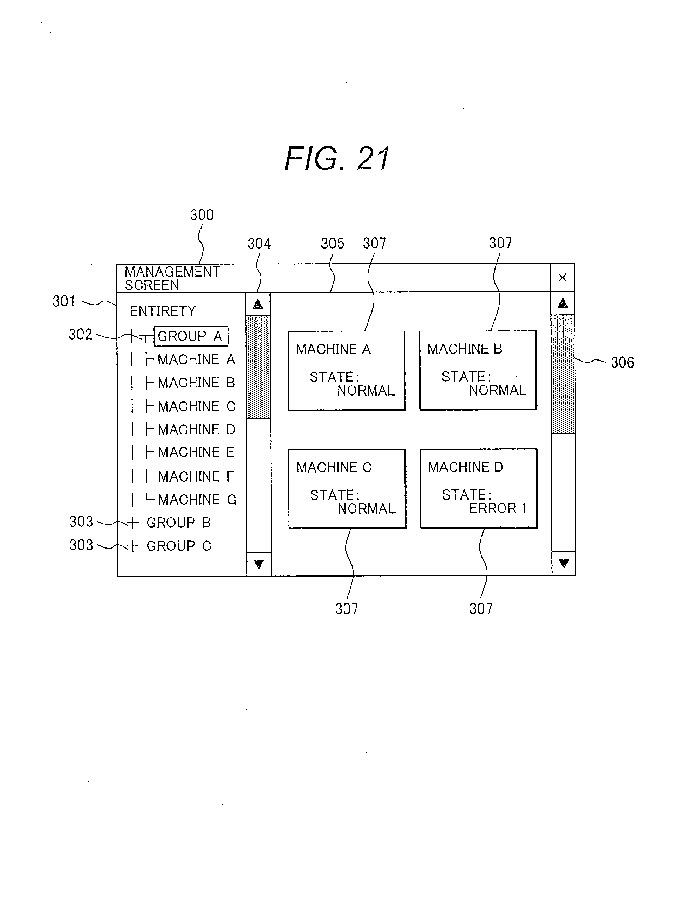

Fig. 21 is an example of the management screen of the machine management device 100 of Fig. 19. The management screen 300 is configured of a tree display part 301 (a first display part), a scroll bar 304 of the tree display part 301 (the first display part), a machine information display part 305 (a second display part), and a scroll bar 306 of the machine information display part 305 (the second display part). 302 of the tree display part 301 (the first display part) shows a state where the tree is expanded, and 303 thereof shows a state where the tree is folded up. Here, it is assumed that the "group A" is being selected. 307 shows information of each device. Here, it is assumed that it displays states of the machines A to D.

Since when hundreds or thousands of air conditioners are installed in a facility, it is not realistic to prepare a large-sized output device 109 capable of displaying entire information of these machines, it is conceivable to adopt a small-sized output device 109 in the machine management device 100 and aim at cost reduction. This output device 109 may be external, or may be incorporated in the machine management device 100. In such a case, the tree structure of hundreds or thousands of air conditioners cannot be displayed in the tree display part 301 (the first display part) simultaneously, but the user can check the tree structure of the hundreds or thousands of air conditioners by operating expansion and folding of the tree in the tree display part 301 (the first display part) or operating the scroll bar 304.

Explaining a case where abnormality has occurred in the air conditioner or a machine has entered the specific state such as in energy saving operation, in maintenance, etc. it is desirable to configure the machine management device so that the user can see immediately that a certain machine has entered the specific state like this. The multiple machines of the tree structure of this embodiment are classified into multiple groups; for example, the machines A to G are classified into the group A as shown in Fig. 21. Moreover, although illustration is not given, other multiple machines are classified into the group B or the group C, and if the user selects the group +B or the group +C of Fig. 21, the user can check the machines classified into it by expanding them in the tree structure, respectively. Moreover, if the group -A is selected, the expanded tree structure can be closed.

Moreover, each of the group A, the group B, and the group C belongs to the entirety that is an even higher group. Although the entirety serves as the highest group in Fig. 21, the tree structure may be modified so that another group may exist in the same higher order as this entirety. For example, considering that multiple air conditioners are installed in a certain building, the tree structure may be specified as follows: the entire building is designated as a highest group; each floor is designated as a first lower group; information indicating a room and positions such as an east side in each floor is designated as a second lower group; and each air conditioner belongs to the second lower group that is the lowest group.

In this way, when the lower groups becomes a plurality, as shown in Fig. 21, all the groups cannot be displayed simultaneously in the tree display part 301 (the first display part). Therefore, in Fig. 21, the scroll bar 304 is displayed and the user can check the tree structure of all the groups by operating this.

Then, for example, when the air conditioner belonging to the group B illustrated in Fig. 21 has entered the above-mentioned specific state, by performing some way of highlighting such as changing a color of the group B of Fig. 21 and making it blink, the user is enabled to know that any one of the air conditioners belonging to the group B has entered the specific state.

Moreover, when the air conditioner belonging to a group H that is not illustrated in Fig. 21 has entered the specific state, even if display of the group H is changed to the highlighting as described above, the group H is not displayed in the tree display part 301 (the first display part), and therefore the user cannot grasp this immediately. Then, by highlighting of the entirety that is the further higher group of the group H, the user can recognize that the air conditioner belonging to any one of the groups has entered the specific state.

However, even if the entirety that is the higher group is highlighted in this way, for example, in the case of a centralized control system in which thousands of air conditioners belong to hundreds of groups, it requires very significant labor only to check to which group of the tree display part 301 (the first display part) the air conditioner having entered the specific state belongs. That is, in order for the user to look for this, it is necessary to display the machine information in the machine information display part 305 (the second display part) by operating the scroll bar 304 manually or selecting the group that is highlighted, and the further improvement of the user's convenience is required.

Then, in the below, an operation example of the machine management device 400 of this embodiment that solves such problems will be explained. Fig. 22 is an example of a block diagram of the machine management device 400 of this embodiment. The machine management device 400 of this embodiment is the machine management device 100 of Fig. 19 to which a display machine selection screen creation part 401 for creating a specific state machine selection part for selecting a machine to be displayed on the management screen and specific state information 402 that is accumulated in the storage device 102 when the machine information monitoring part 111 detects the machine in the specific state are added. Incidentally, Fig. 22 is an example of the block diagram of the machine management device, which is not intended to limit the machine configuration, the number of the machines, and the connection form of the machines.

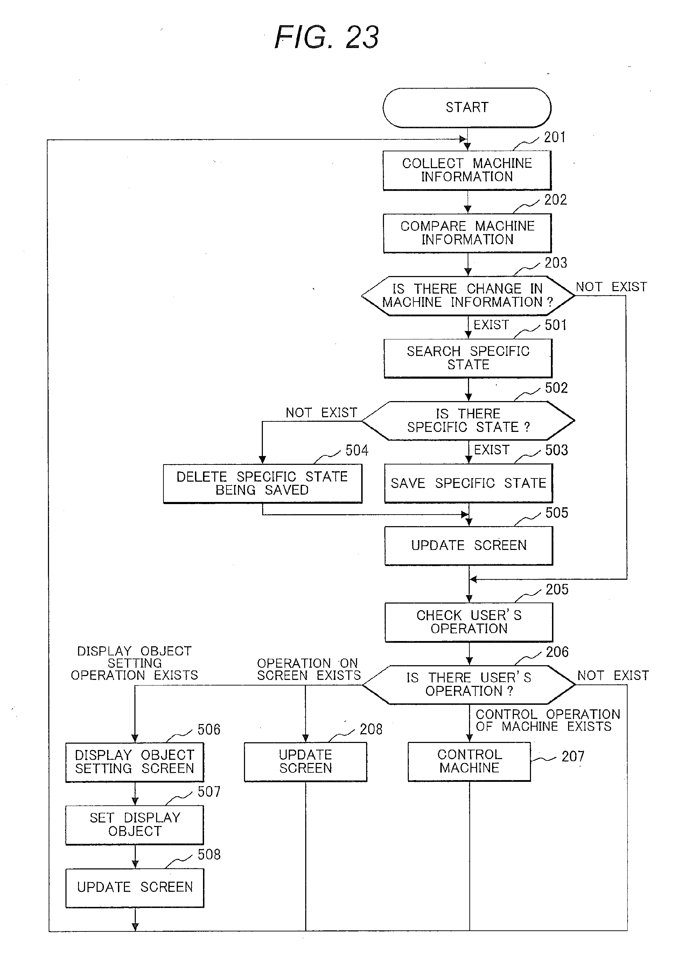

Fig. 23 is a management flowchart of the machine management device 400 of this embodiment. Since Fig. 20 explains Steps 2001 to 2003 and Steps 2005 to 2008, explanation here is omitted. Incidentally, Step 2004 is modified to Step 505 where an operation of Step 2004 is changed.
Step 501: The machine information monitoring part 111 looks for whether the machine has entered the specific state, for example, whether the machine in which an error has occurred exists from the latest machine information 115.
Step 502: When the machine having entered the specific state exists, the flow proceeds to Step 503. When it does not exist, the flow proceeds to Step 504.
Step 503: The machine information monitoring part 111 accumulates the specific state information 402 in the storage device 102.
Step 504: The machine information monitoring part 111 deletes the specific state information 402 accumulated in the storage device 102.
Step 505: The machine information monitoring part 111 requests creation and output of the management screen of the management screen creation part 112. Upon reception of the request, the management screen creation part 112 creates the management screen using the latest machine information 115 accumulated in the storage device 102 and the specific state information 402, and outputs a specific state machine selection part 601 and the specific state to the output device 109 through the output part 105.
Step 506: The display machine selection screen creation part 401 creates a display machine selection screen for selecting the machine to be displayed, and outputs it to the output device 109 through the output part 105. At this time, the state that is selected is highlighted using the specific state information 402 accumulated in the storage device 102.
Step 507: The display machine is set up according to the user's operation inputted from the input device 108 through the input part 104.
Step 508: The management screen creation part 112 creates the management screen according to set-up of Step 507, and outputs it to the output device 109 through the output part 105. When the updating of the screen is completed, the flow returns to Step 2001 and continues the management of the machine.

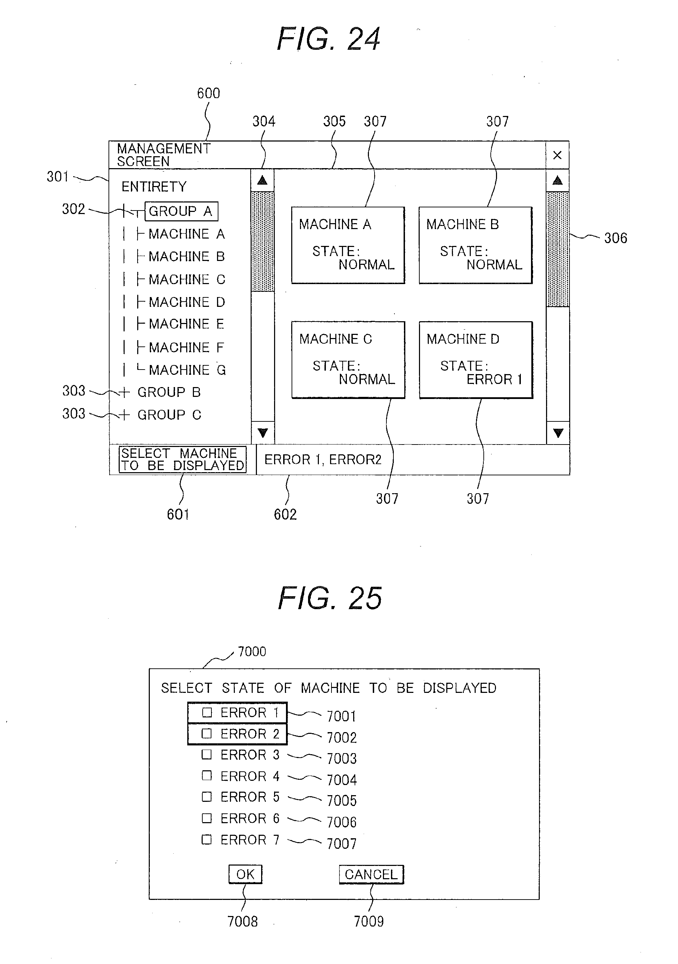

Fig. 24 is an example of the management screen of the machine management device 400 of this embodiment. With respect to the management screen 600, the specific state machine selection part (the display machine selection button 601) and the notification area 602 (the specific state display part) as a display part for notifying the specific state are added to 301 to 307 of Fig. 21. Here, it displays that the machine in which an error 1 and an error 2 have occurred exists in the notification area 602 (the specific state display part) as one example of the specific state.

As shown in Steps 501 to 505, in this embodiment, when it is judged by the machine information monitoring part 111 that any one of the multiple machines has entered the specific state, the specific state machine selection part (the display machine selection button 601) that enables the machine having entered the specific state to be displayed by a selection operation is displayed on the output device 109 (the management screen 600). Here, even when the machine having entered the specific state is not displayed in the tree display part 301 (the first display part), the specific state machine selection part (the display machine selection button 601) is displayed on the management screen 600 without the scroll operation with the scroll bar 304 being performed. Moreover, when it is judged by the machine information monitoring part 111 that any one of the multiple machines has entered the specific state, by the specific state machine selection part (the display machine selection button 601) being highlighted, the user is enabled to grasp immediately existence of the machine having entered abnormality such as an error or a certain specific state even in the case where the machine having entered the specific state is not displayed in the tree display part 301 (the first display part).

Moreover, on the management screen 600, when it is judged by the machine information monitoring part 111 that any one of the multiple machines has entered the specific state, the existence of the machine having entered the specific state is displayed in the notification area 602 (the specific state display part) for displaying it. Since this notification area 602 (the specific state display part) is displayed on the management screen 600 without performing the scroll operation with the scroll bar 304 even when the machine having entered the specific state is not displayed in the first display part, it becomes possible for the user to grasp immediately whether there is any machine that has entered what specific state specifically.

Fig. 25 is an example of the display machine selection screen that is displayed when the user selects the specific state machine selection part (the display machine selection button 601). A state selection part (a display machine selection screen 7000) is configured of the menus 7001 to 7007 whereby the state of the machine being intended to be displayed is selected, an OK button 7008 that executes the selection of the machine to be displayed, and a cancel button 7009 that halts it. That is, on the management screen 600, when there is the selection operation of the specific state machine selection part (the display machine selection button 601), the state selection part (the display machine selection screen 7000) for selecting the state of the machine to be displayed from among multiple kinds of states that can be judged by the machine information monitoring part 111 is displayed. Here, the error 1 to the error 7 are shown as an example of the multiple kinds of specific states that can be judged. Then, in the state selection part (the display machine selection screen 7000), the specific states (the error 1, the error 2) among multiple kinds of states (the error 1 to the error 7) are highlighted.

When the multiple states are selected, a search method of the machine to be displayed may be any one of AND search, OR search, and NOT search. Alternatively, the search methods may be combined. In this embodiment, assuming that the error 1 and the error 2 have occurred, a selection menu of the error 1 and the error 2 is surrounded by the frame borders to highlight them. For the highlighting, methods of changing characters to bold letters, enlarging a font size, changing a character color, making the characters blink, etc. may be used.

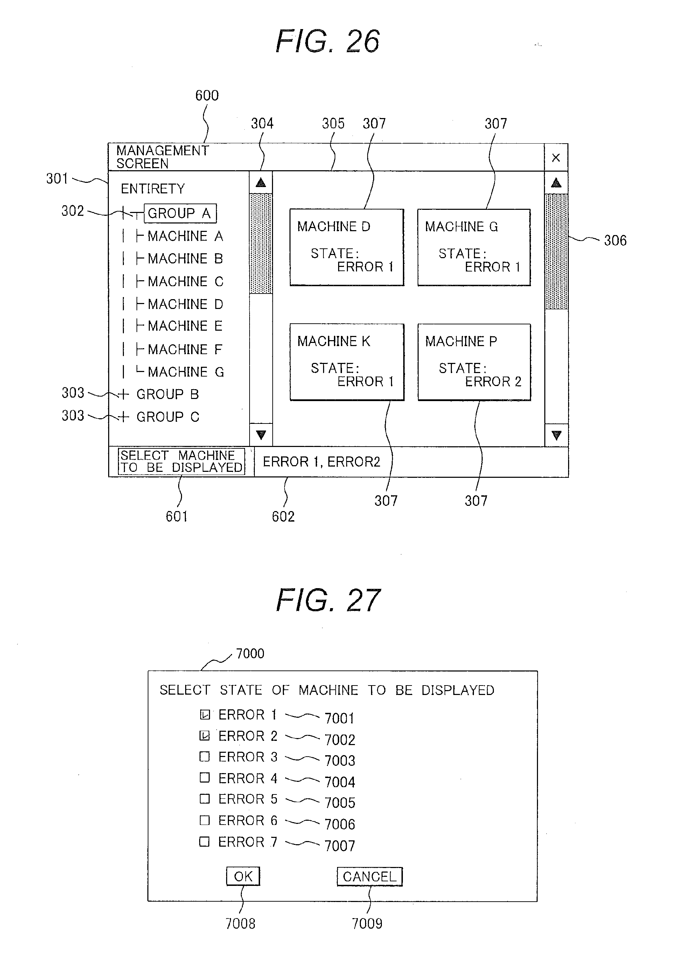

Fig. 26 is an example of the screen when the error 1 and the error 2 are selected by pressing the menu selection buttons 7001, 7002 and the machine to be displayed is selected by the OR search. The screen shows that the machine whose state is normal becomes non-display, and only the machines whose states are the error 1 or the error 2 are displayed. That is, by selecting the specific states (the error 1 and the error 2) (by selecting the menus 7001, 7002), the machines in the selected specific states and their states are displayed on the management screen 600.

Incidentally, although here, as shown in Fig. 26, the machine management device is configured to display the machines in the specific states (the error 1 and the error 2) and their states after being selected by the state selection part (the display machine selection screen 7000) of Fig. 25, the machine management device may be configured so as to when the specific state machine selection part (the display machine selection button 601) of Fig. 24 has the selection operation, display the machines in the specific states (the error 1 and the error 2) and their states immediately as shown in Fig. 26 without displaying the specific state machine selection part (the display machine selection button 601) of Fig. 25. Moreover, display of the machines of such specific states (the error 1 and the error 2) and their states are performed in the machine information display part 305 (the second display part).

Although this embodiment explains the screen to select the errors 1 to 7, the machine management device may be configured to be able to select a state of energy-saving operation, a state of maintenance, etc. besides the errors. As explained above, by highlighting the specific state machine selection part (the display machine selection button 601), the user is enabled to grasp immediately that any machine has entered the specific state without performing the scroll operation with the scroll bar 304, which can attain improvement of the user's convenience. Then, by highlighting the specific state (the error 1 and the error 2 in Fig. 25) in the state selection part (the display machine selection screen 7000), the user is enabled to grasp at a glance whether useful information can be displayed by selecting which state, and to check the information immediately.

### <Ninth embodiment>

In this embodiment, an example of the machine management device that displays the display machine selection screen in a state where the specific state is selected instead of highlighting.

In this embodiment, an operation of Step 506 is changed in the management flowchart of Fig. 23.

Step 506: The display machine selection screen creation part 401 creates the display machine selection screen for selecting a machine to be displayed, and outputs it to the output device 109 through the output part 105. At this time, the specific state is selected and displayed using the specific state information 402 accumulated in the storage device 102.

Fig. 27 is an example of the display machine selection screen in which the specific state is selected. By selecting the specific state in advance and displaying it like this, the user is enabled to grasp at a glance which state the user can select to display useful information, which can improve the convenience of the machine management device.

### Reference Signs List

- 100: machine management device,
- 101: processing part,
- 102: storage device,
- 103: communication part,
- 104: input part,
- 105: output part,
- 106: machine A,
- 107: device R,
- 108: input device,
- 109: output device,
- 110: device information collection part,
- 111: device information monitoring part,
- 112: management screen creation part,
- 113: machine control part,
- 114: channel,
- 115: device information,
- 201: group display part,
- 207: device information of machine managed by "group a",
- 3001: out-of-range display part,
- 4001: group entirety display part,
- 801: display section line,
- 901: display frame borders,
- 1001: machine information of machine managed by "group d",
- 1101: machine information of machine managed by "group j",
- 1201: machine information of machine managed by "block 8",
- 1301: machine information of machine managed by "group p",
- 116: previous machine information,
- 300: management screen,
- 301: tree display part (first display part),
- 302: tree expansion state,
- 303: tree folded state,
- 304: scroll bar of tree display part (first display part),
- 305: machine information display part (second display part),
- 306: scroll bar of machine information display part (second display part),
- 307: information of each device,
- 400: machine management device,
- 401: display machine selection screen creation part,
- 402: specific state information,
- 600: management screen,
- 601: display machine selection button (specific state machine selection part),
- 602: notification area,
- 7000: display machine selection screen (state selection part),
- 7001: menu to select state,
- 7002: menu to select state,
- 7003: menu to select state,
- 7004: menu to select state,
- 7005: menu to select state,
- 7006: menu to select state,
- 7007: menu to select state,
- 7008: ok button,
- 7009: cancel button.

## Claims

1. A machine management device for providing a management screen by which a plurality of machines are classified into groups and are managed,
comprising:
a group display part for displaying as many groups as can be settled in a prescribed display area of the management screen among the groups; and
a group entirety display part for displaying information of all groups in an order in which the groups are displayed in the group display part and so that the information may be settled in the prescribed display area of the management screen,
wherein when the machine has entered a predetermined state, a form of positions of the group entirety display part corresponding to the group to which the machine belongs changes correspondingly to the predetermined state.

2. The machine management device according to claim 1,
wherein when the machines have entered the predetermined state, a form of positions of the group entirety display part corresponding to the group to which the machines belong changes correspondingly to the predetermined state, and at the same time a form of positions of the group display part corresponding to the group to which the machines belong changes.

3. The machine management device according to claim 1,
wherein a display area of the group entirety display part is divided by a number more than or equal to the number of the groups, and
wherein information of all groups is displayed in these divided display areas in the order in which the groups are displayed in the group display part and so as to be settled in a prescribed display area of the management screen.

4. The machine management device according to claim 1,
wherein the groups are classified into a higher group and are managed,
wherein in the group display part, the groups and the higher groups that can be settled in a prescribed display area of the management screen among the groups and the higher groups are displayed,
wherein a display area of the group entirety display part is divided by a number more than or equal to the number obtained by summing the groups and the higher groups, and
wherein in these divided display areas, information of an entirety of the groups and the higher groups is displayed in an order in which the groups and the higher groups are displayed in the group display part and so as to be settled in the prescribed display area of the management screen.

5. The machine management device according to claim 1,
comprising a scroll display part that enables all the groups to be displayed in the group display part by an operation of a scroll bar by the user,
wherein the scroll display part is provided in a position corresponding to the group entirety display part, and
wherein when the scroll bar is located in a position corresponding to a predetermined group of the group entirety display part, the group display part displays the predetermined group in the display area.

6. A machine management device that provides a management screen having:
a first display part for classifying a plurality of machines into a plurality of groups and displaying the groups and the machines in a tree structure;
a scroll part for, when all the groups or all the machines cannot be displayed, enabling all the groups or all the machines to be displayed in the first display part by a scrolling operation; and
a second display part for, by the groups displayed in the first display part being selected, displaying information of the machines belonging to the selected group or displaying information of the machines selected from among the machines displayed in the first display part,
comprising a machine information monitoring part for monitoring states of the machines,
wherein when the machine information monitoring part judges that any one of the machines has entered a specific state, a specific state machine selection part that enables the machine having entered the specific state to be displayed on the management screen is displayed on the management screen, and
wherein the specific state machine selection part is displayed on the management screen without a scroll operation by the scroll part being performed even when the machine having entered the specific state is not displayed in the first display part and when the machine information monitoring part judges that any one of the machines has entered the specific state, the machine is highlighted.

7. The machine management device according to claim 1,
wherein on the management screen, when a selection operation is performed in the specific state machine selection part, the machine in the specific state and its state are displayed.

8. The machine management device according to claim 1,
wherein on the management screen, when a selection operation is performed in the specific state machine selection part, a state selection part for selecting a state of a machine to be displayed among a plurality of kinds of states that are judicable by the machine information monitoring part is displayed, and
wherein the specific state among the kinds of states is highlighted in the state selection part and the machine in the specific state selected by selecting the specific state and its state are displayed.

9. The machine management device according to claim 7 or 8,
wherein display of the machine in the specific state and its state is performed in the second display part.

10. The machine management device according to any one of claims 6 to 8,
wherein on the management screen, when the machine information monitoring part judges that any one of the machines has entered the specific state, the specific state display part for displaying existence of the machine having entered the specific state is displayed, and
wherein the specific state display part is displayed on the management screen without the scroll operation by the scroll part being performed even when the machine having entered the specific state is not displayed in the first display part.
